# EUROPÄISCHE PATENTSCHRIFT

(11) **EP 2 421 100 B1**
(45) Veröffentlichungstag und Bekanntmachung des Hinweises auf die Patenterteilung: **02.03.2016**
(21) Anmeldenummer: 10008580.2
(22) Anmeldetag: 17.08.2010
(51) Int. Cl.: H01R 13/66

(54) **Ethernet-Kommunikationsnetz**
Ethernet communication network
Réseau de communication Ethernet

(43) Veröffentlichungstag der Anmeldung: 22.02.2012
(73) Patentinhaber: Siemens Aktiengesellschaft, 80333 München (DE)
(72) Erfinder: Gottwald, Sven, 90475 Nürnberg (DE); Kasper, Michael, 90411 Nürnberg (DE)

(56) Entgegenhaltungen:
- EP-A1- 2 117 174
- DE-A1- 10 242 921
- DE-A1- 19 513 316
- DE-A1- 19 810 587
- US-A1- 2002 025 710

## Beschreibung

Die vorliegende Erfindung betrifft ein Ethernet-Kommunikationsnetz.

Steckverbindungsmodule sind aus dem Stand der Technik bekannt. So gibt es beispielsweise so genannte RJ45-Stecker zum Verbinden einer Ethernet-Leitung mit einer entsprechenden RJ45-Schnittstelle bzw. einer RJ45-Buchse eines elektronischen Geräts, um dieses Gerät an ein Ethernet anzuschließen.

Dokument DE-A1-102 42 921 entspricht dem Oberbegriff von Anspruch 1.

Aus der europäischen Patentschrift EP 1 062 787 B1 ist beispielsweise ein industrielles Ethernet-Netzwerk bekannt, bei welchem ein elektronisches Gerät über zwei Ethernet-Schnittstellen und zwei entsprechende Steckverbinder in ein ringförmig ausgebildetes Ethernet-Netzwerk integriert sind. Dabei ist die Kommunikation innerhalb des Netzwerks so organisiert, dass jedes der im Ring enthaltenen elektronischen Geräte die Ethernet-Rahmen weiterleitet, die nicht für es selbst bestimmt sind. Auf diese Weise können Ethernet-Rahmen an alle Teilnehmer im Kommunikationsring geschickt werden. Beim Ausfall eines der im Ring integrierten Geräte wird allerdings die Kommunikationsverbindung durch dieses Gerät hindurch unterbrochen. Die ringförmige Struktur erlaubt es allerdings, dass trotzdem zu jedem Gerät immer noch ein Kommunikationspfad zur Verfügung steht.

Es ist ein Nachteil des Standes der Technik, dass insbesondere in industriellen Anlagen häufig entsprechend über ein Ethernet verbundene Geräte entlang einer langen Produktionsstraße aufgebaut sind und eine Absicherung des Kommunikationsstroms in diesem industriellen Ethernet über eine ringförmige Struktur häufig sehr aufwändig ist.

Daher ist es eine Aufgabe der vorliegenden Erfindung, ein Konzept zur Verfügung zu stellen, welches die Ausfallsicherheit eines Ethernet-Netzwerks verbessert und/oder vereinfacht.

Diese Aufgabe wird gelöst von einem linienförmigen Ethernet-Netzwerk mit den Merkmalen des vorliegenden Patentanspruches 1.

Ein Steckverbindungsmodul zum Anschluss eines elektronischen Geräts an ein Ethernet-Kommunikationsnetz umfasst einen ersten und einen zweiten Ethernet-Anschluss zur Verbindung mit einem oder mehreren Ethernet-Netzen oder Ethernet-Teilnetzen und einen Geräteanschluss zur Verbindung mit dem elektronischen Gerät, wobei das Steckverbindungsmodul weiterhin ein Schalt-Netzknoten-Modul umfasst und die zwei Ethernet-Anschlüsse sowie der Geräteanschluss über das Schalt-Netzknoten-Modul derart gekoppelt sind, ein über einen der Anschlüsse eingehender Ethernet-Rahmen an mindestens einen der anderen Anschlüsse weiterleitbar ist oder weiter geleitet wird.

Mit Hilfe eines derartigen Steckverbindungs-Moduls, welches quasi eine vereinfachte, beziehungsweise auf wesentliche Teile reduzierte, Schalt-Netzknoten-Funktionalität (Fachbegriff: "Switching"-Funktionalität) aufweist, ist es möglich, beispielsweise ein relativ einfaches linienförmiges Ethernet-Kommunikationsnetz aufzubauen, welches auch bei einem oder sogar mehreren Geräteausfällen funktionstüchtig bleibt, da über die Switching-Funktionalität der Steckverbindungs-Module dafür Sorge getragen werden kann, dass trotz des Geräteausfalls Nachrichten entlang der gesamten Linie transportiert werden können.

Ein solches Ethernet-Kommunikationsnetz kann beispielsweise gemäß einem IEEE 802.3-Standard ausgebildet sein. Das Ethernet-Kommunikationsnetz kann beispielsweise weiterhin als so genanntes "industrial Ethernet", PROFINET oder auch weitere vergleichbare Ethernet-Kommunikationsnetze ausgestaltet sein.

Ein Ethernet-Anschluss des Steckverbindungsmoduls kann beispielsweise als eine mit dem Steckverbindungsmodul verbundene Ethernet-Leitung ausgebildet sein. Weiterhin kann ein Ethernet-Anschluss beispielsweise als Stecker oder Buchse (z.B. als RJ45-Stecker oder -Buchse) zum Anstecken einer Ethernet-Leitung oder auch als Anschluss zum festen und dauerhafteren Anschluss einer Ethernet-Leitung, beispielsweise über eine Klemm- oder Lötverbindung, ausgebildet sein. Insbesondere kann das Steckverbindungsmodul beispielsweise so ausgebildet sein, dass einer der Ethernet-Anschlüsse als mit dem Steckverbindungsmodul verbundenes Ethernetkabel und der andere als eine Buchse für eine Ethernet-Leitung ausgebildet ist. Auf diese Weise lassen sich mit gleichartigen Steckverbindungsmodulen beispielsweise linienförmige Netzabschnitte aufbauen.

Die Ethernet-Anschlüsse können beispielsweise so vorgesehen sein, dass der erste der Ethernet-Anschlüsse mit einem ersten Ethernet-Teilnetz beziehungsweise einem ersten Ethernet-Netz verbindbar ist, während der zweite Ethernet-Anschluss mit einem zweiten Ethernet-Teilnetz oder einem zweiten Ethernet-Netz verbindbar ist. Weiterhin lässt sich ein solches Steckverbindungsmodul beispielsweise auch in ein Ethernet-Netz integrierten, z.B. ein ringförmiges, linienförmiges, verzweigtes, vermaschtes oder ähnliches Ethernet-Netz.

Ein elektronisches Gerät kann jede Art von Gerät sein, welches zum Senden und/oder Empfangen von Ethernet-Rahmen beziehungsweise zur Ankopplung an ein Ethernet-Netzwerk vorgesehen und eingerichtet ist. Dies können beispielsweise die verschiedensten Netzknoten, Kommunikations-Endgeräte, Datenverarbeitungseinrichtungen (Computer, Displays, .....), Automatisierungs- oder Steuerungseinrichtungen, Messgeräte oder Ähnliches sein.

Das Schalt-Netzknoten-Modul kann beispielsweise die Funktionalität, die Grundfunktionalität oder auch Teile der Funktionalität eines so genannten "Switchs", einer so genannten "Bridge", eines so genannten "Hubs" und/oder eines so genannten "Routers" aufweisen. Dabei kann diese Schalt-Netzknoten-Funktionalität beispielsweise in Hardware oder in teilweise in Hard- und Software oder auch ausschließlich in Software realisiert sein. Beispielsweise kann das Schalt-Netzknoten-Modul einen sogenannten Switching-, Routing- und/oder Hub-Asic umfassen. Die Funktionalität des Schalt-Netzknotenmoduls kann z.B. als entsprechend eingerichtete logische Schaltung realisiert sein, beispielsweise als so genanntes FPGA (Field Programmable Gate Array).

Das Steckverbindungsmodul kann beispielsweise derart ausgebildet sein, dass außer den zwei Ethernet-Anschlüssen und dem Geräteanschluss weitere Kommunikationsanschlüsse beziehungsweise Anschlussmöglichkeiten vorgesehen sind. In einer vorteilhaften Ausgestaltung weist das Steckverbindungsmodul aber nur die zwei Ethernet-Anschlüsse sowie den Geräte-Anschluss auf. Bei dieser Ausgestaltung sind darüber hinaus keine weiteren Kommunikations-Anschlüsse vorhanden oder vorgesehen. Auf diese Weise lässt sich ein besonders einfaches und Strom sparendes Steckverbindungsmodul mit einem Schalt-Netzknoten-Modul erreichen, da durch die geringe und fest vorgegebene Anzahl von Kommunikationsanschlüssen die interne Verschaltung mit relativ geringen Ressourcen realisiert werden kann.

In einer vorteilhaften Ausgestaltung ist das Schalt-Netzknoten-Modul derart ausgebildet, dass ein eingehender Ethernet-Rahmen an den Anschluss des Steckverbindungsmoduls weitergeleitet wird, welcher mit dem für den Ethernet-Rahmen vorgesehenen Empfänger verbunden ist.

Durch eine solche, relativ elementare "Switching-Funktionalität", lässt sich die Ausfallsicherheit auch eines einfachen Netzwerks weiter erhöhen, da auf diese Weise beispielsweise erreicht werden kann, dass Nachrichten, die nicht für ein ausgefallenes oder defektes Gerät vorgesehen sind, über das Steckverbindungsmodul im Netz weitergeleitet werden können.

Dabei kann der für einen Ethernet-Rahmen vorgesehene Empfänger beispielsweise durch die im Ethernet-Rahmen enthaltene, so genannte MAC-Adresse (MAC: Medium Access Layer; dies ist eine Schicht im so genannten OSI-Schichtmodell) vorgegeben sein. Weiterhin kann vorgesehen sein, dass Nachrichten ohne dedizierte MAC-Adresse, beispielsweise so genannte Multicast- oder Broadcast-Nachrichten, an alle verbleibenden Anschlüsse (insbesondere außer dem Anschluss, über welchen die Nachricht eingegangen ist), versendet wird.

Das Schalt-Netzknoten-Modul kann beispielsweise auch derart ausgebildet sein, dass ein über einen der Ethernet-Anschlüsse eingehender und an ein an den Geräte-Anschluss angeschlossenes elektronisches Gerät adressierter oder für das angeschlossene elektronische Gerät vorgesehener Ethernet-Rahmen zum Geräte-Anschluss weitergeleitet wird. Weiterhin kann zudem auch vorgesehen sein, dass ein nicht an das angeschlossene Gerät adressierter oder für das angeschlossene Gerät vorgesehener Ethernet-Rahmen an den anderen der Ethernet-Anschlüsse weitergeleitet wird.

Dabei kann die Adressierung an ein elektronisches Gerät beispielsweise wieder über die so genannte MAC-Adresse erfolgen. Bei Ethernet-Rahmen, die keine konkrete Geräte-Adresse enthalten, beispielsweise die genannten Broadcast- oder Multicast-Rahmen, kann vorgesehen sein, dass diese sowohl an den Geräte-Anschluss, als auch an den anderen der Ethernet-Anschlüsse weitergeleitet wird.

Bei dem vorstehend genannten Verfahren ist zwingend nur erforderlich, dass im Steckverbindungs-Modul die Adresse des am Geräte-Anschluss angeschlossenen Geräts bekannt ist. Das Verfahren kann in diesem Fall beispielsweise so ausgestaltet sein, dass eine Nachricht, welche eine dedizierte MAC-Adresse enthält, welche nicht die des angeschlossenen elektronischen Geräts ist, immer an den anderen der Ethernet-Anschlüsse weitergeleitet wird. Auf diese Weise lässt sich ein weiter vereinfachtes Steckverbindungs-Modul mit Schalt-Netzknoten-Modul erreichen, da so die Ressourcen, beispielsweise auch zum Ermitteln und Speichern von Geräteadressen weiter reduziert werden kann.

Weiterhin kann auch vorgesehen sein, dass das Steckverbindungs-Modul die Adressen möglichst vieler oder aller im Ethernet-Netzwerk vorhandenen Geräte kennt, um jeweils entscheiden zu können, an welchen Ausgang eine Nachricht weitergeleitet wird. Diese Ausgestaltung hat den Vorteil, dass ein solches Steckverbindungsmodul flexibler auch in verschiedenste andere Netze integrierbar ist.

In einer vorteilhaften Ausgestaltung kann das Steckverbindung-Modul derart ausgestaltet und eingerichtet sein, dass die Versorgung des Schalt-Netzknoten-Moduls mit elektrischer Energie über den ersten Ethernet-Anschluss und/oder den zweiten Ethernet-Anschluss und/oder den Geräte-Anschluss erfolgt. Weiterhin kann vorgesehen sein, dass die Versorgung des gesamten Steckverbindungs-Moduls mit der für den Betrieb erforderlichen elektrischen Energie über den ersten Ethernet-Anschluss und/oder den zweiten Ethernet-Anschluss und/oder den Geräte-Anschluss erfolgt.

Auf diese Weise wird die Handhabung der Steckverbindungsmodule weiter vereinfacht, da keine gesonderte Energieversorgung mehr notwendig ist. Dabei kann das Steckverbindungs-Modul derart ausgestaltet sein, dass die Energieversorgung sowohl über einen der genannten Anschlüsse, als auch über zwei oder gar alle drei der genannten Anschlüsse erfolgen kann. In einer vorteilhaften Ausgestaltung der Erfindung genügt zur Versorgung des Schalt-Netzknoten-Moduls und/oder des gesamten Steckverbindungs-Moduls die Versorgung über einen der Ethernet-Anschlüsse. Das Steckverbindungs-Modul und/oder das Schalt-Netzknoten-Modul kann weiterhin derart ausgestaltet sein, dass die zum Betrieb erforderliche Leistungsaufnahme maximal 1 Watt ist, bevorzugt maximal 500 Milliwatt und weiter bevorzugt maximal 100 Milliwatt beträgt. Auf diese Weise lässt sich die für ein solches Schalt-Netzknoten-Modul erforderliche Energie bereits mit heute verfügbaren Ressourcen und Ausrüstungen erreichen und so ein relativ einfaches und preiswertes Ethernet-Netz unter Verwendung solcher Steckverbindungsmodule aufbauen.

Zudem kann auch vorgesehen sein, dass die Energieversorgung von Schalt-Netzknoten-Modul und/oder Steckverbindungs-Modul teilweise über den ersten Ethernet-Anschluss und/oder den zweiten Ethernet-Anschluss und/oder den Geräte-Anschluss erfolgt. Auf diese Weise kann z.B. eine Art "Notstrom-Betrieb" realisiert sein, bei welchem die volle Funktionalität des Moduls mit einer zusätzlichen Energieversorgung erreicht wird und z.B. bei einem lokalen Stromausfall über die Kommunikationsanschluss-Energieversorgung eine Basis-Betrieb des Moduls aufrechterhalten werden kann.

Vorteilhafterweise kann die Versorgung des Schalt-Netzknoten-Moduls beziehungsweise des Steckverbindungs-Moduls mit elektrischer Energie gemäß einer "Power over Ethernet" (PoE)-Norm oder einer vergleichbaren Norm erfolgt. Auf diese Weise ist es möglich, beispielsweise mit heute verfügbaren Ethernet-Kabeln und Ethernet-Netzknoten und anderen Einrichtungen zusammen ein Ethernet-Netzwerk unter Verwendung der in der vorliegenden Beschreibung genannten Steckverbindungsmodule aufzubauen. Dabei kann die Versorgung des Steckverbindungsmoduls mit elektrischer Energie beispielsweise der PoE-Norm IEEE 802.3af oder einer ähnlichen Norm beziehungsweise deren Weiterentwicklung erfolgen.

In einer weiteren vorteilhaften Ausgestaltung kann das Steckverbindungsmodul derart ausgebildet und eingerichtet sein, dass über einen oder mehrere der Anschlüsse zugeführte elektrische Energie zumindest teilweise an die verbleibenden Anschlüsse weitergeleitet wird. Dabei kann beispielsweise vorgesehen sein, dass die über einen der Anschlüsse erhaltene elektrische Energie, gegebenenfalls nach Entnahme des für den Betrieb des Steckverbindungsmoduls notwendigen Energie, die Restenergie gleichmäßig oder in einem bestimmten Verhältnis an die verbleibenden zwei Anschlüsse weitergeleitet wird. Entsprechend kann vorgesehen sein, dass in dem Fall, in dem über zwei Anschlüsse bereits Energie zum Steckverbindungsmodul weitergeleitet wird, nach Entnahme der für den Betrieb des Steckverbindungsmoduls notwendigen elektrischen Energie eine kombinierte Energie an den verbleibenden Anschluss weitergeleitet wird.

Weiterhin kann das Steckverbindungsmodul beispielsweise auch eine Energie-Management-Einheit umfassen, welche die beispielsweise die Energie-Entnahme durch das Steckverbindungsmodul beziehungsweise das Schalt-Netzknoten-Modul sowie die gegebenenfalls die Weiterleitung der Energie an bestimmte Anschlüsse regelt.

Auf diese Weise lässt sich ein weiter vereinfachtes Ethernet-Netzwerk unter Verwendung der Steckverbindungsmodule gemäß der vorliegenden Beschreibung erreichen, da auch bei mehreren hintereinander gekoppelten Steckverbindungsmodulen auf diese Weise eine Versorgung der einzelnen Steckverbindungsmodule und gegebenenfalls sogar von daran angeschlossenen Geräten erreicht werden kann.

Weiterhin kann das Steckverbindungsmodul auch derart ausgebildet und eingerichtet sein, dass über den ersten Ethernet-Anschluss zugeführte elektrische Energie zumindest teilweise an den zweiten Ethernet-Anschluss weitergeleitet wird und/oder umgekehrt. Das Steckverbindungsmodul kann gemäß dieser Ausgestaltung beispielsweise derart ausgebildet sein, dass die über den ersten Ethernet-Anschluss zugeführte elektrische Energie teilweise zum Betrieb des Steckverbindungsmoduls beziehungsweise des Schalt-Netzknoten-Moduls verwendet wird und die verbleibende Energie am zweiten Ethernet-Anschluss, beispielsweise für weitere daran angeschlossene Geräte, z.B. weitere Steckverbindungsmodule, verfügbar ist.

Auf diese Weise lässt sich beispielsweise relativ einfach ein linienförmiges Ethernet-Netzwerk unter Verwendung einer Reihe solcher Steckverbindungsmodule aufbauen, in welchem nur eine Energieversorgung zwingend notwendig ist, und welche trotzdem gegenüber dem Ausfall beispielsweise einzelner an mit jeweils einem Steckverbindungsmodul gekoppelten elektronischen Geräten gesichert ist. Dabei kann die Weiterleitung der elektrischen Energie beispielsweise über eine interne Verschaltung analog einer Parallelschaltung aller an das Steckverbindungsmodul angeschlossenen Quellen und Verbraucher eingerichtet sein. Weiterhin kann z.B. auch ein Energie-Management-Modul in einem, mehreren oder allen Steckverbindungsmodulen vorgesehen sein, welches die Entnahme und Weiterleitung der elektrischen Energie regelt.

Die Energieversorgung kann beispielsweise durch eine Ethernet-Netzkomponente erfolgen, welche zusätzlich zur Eigenschaft als Kommunikations-Knoten die Energieversorgung einer daran angeschlossenen Ethernet-Leitung unterstützt (z.B. ein PoE-fähiger Switch). Weiterhin kann die Energieversorgung für ein solches Ethernet-Netz auch in einer gesonderten Energieversorgungseinheit, beispielsweise einer Stromquelle zur Integration in ein solches Netz erfolgen welche nur die Aufgabe hat, elektrische Energie, z.B. gemäß dem PoE-Standard, in eine oder mehrere angeschlossene Ethernet-Leitungen einzuspeisen.

In einer vorteilhaften Ausgestaltung kann das Steckverbindungsmodul ein Gehäuse aufweisen und der Geräte-Anschluss als Steckverbinder ausgebildet sein. Zudem können beispielsweise das Gehäuse und der Steckverbinder starr miteinander verbunden sein und/oder einstückig ausgebildet sein. Dabei können weiterhin das Gehäuse und der Steckverbinder derart ausgebildet und dimensioniert sein, dass bei in einem elektronischen Gerät eingestecktem Steckverbinder keine weitere mechanische Halterung des Steckverbindungsmoduls erforderlich ist. In diesem Fall kann das Steckverbindungsmodul z.B. derart ausgestaltet sein, dass die Lastaufnahme durch diese Steckverbindung und/oder die Lastaufnahme durch entsprechend angeschlossenen Kabelverbindungen ausreicht, um das Steckverbindungsmodul zu haltern oder zu fixieren. Auf diese Weise lässt sich der Aufbau eines Netzes weiter vereinfachen, da keine gesonderten Aufbauten oder Montage-Fragestellungen beachtet werden müssen, sondern das Steckverbindungsmodul quasi einfach nur in das jeweilige elektronische Gerät eingesteckt werden muss.

Bei der Ausgestaltung, in welchem Gehäuse und Steckverbinder starr miteinander verbunden sind, beziehungsweise das Steckverbindungsmodul einstückig ausgebildet ist, entspricht die Handhabung des Steckverbindungsmoduls für einen Benutzer der einfachen Handhabung eines Steckers, gegebenenfalls eines etwas größer ausgebildeten normalen Steckers. Auf diese Weise lässt sich der Aufbau eines derartigen Ethernet-Netzwerks unter Verwendung von Steckerbindungsmodulen gemäß der vorliegenden Beschreibung weiter vereinfachen, da der Aufbau eines solchen Netzes für einen Benutzer durch die einfache Handhabbarkeit eines solchen Steckverbindungsmoduls weiter vereinfacht wird. Besonders einfach wird die Handhabung eines solchen Moduls, wenn bei diesem die vorstehend genannte mechanische Ausgestaltung mit einer der weiter vorne dargestellten Optionen der Energieversorgung des Steckverbindungs-Moduls über eine der Datenschnittstellen (z.B. PoE), da dann auch kein gesonderter Anschluss an eine externe Energiequelle mehr beachtet werden muss.

Das Gehäuse kann dabei derart ausgebildet und angeordnet sein, dass es zumindest das Schalt-Netzknoten-Modul umschliesst. Damit können dieses Modul und unter Umständen auch weitere z.B. elektronische Komponenten des Steckverbindungsmoduls z.B. vor Umwelteinflüssen geschützt werden.

Der Steckverbinder kann dabei als Stecker zum Einstecken in eine entsprechende Buchse des elektronischen Geräts oder als Buchse zum Aufstecken auf einen entsprechenden Stecker des elektronischen Geräts ausgebildet sein. Insbesondere kann der Steckverbinder beispielsweise als RJ45-Stecker, wie er regelmäßig für Ethernet-Leitungen verwendet wird, ausgestaltet sein.

Die vorstehend genannte Aufgabe wird weiterhin gelöst durch einen linienförmiges Ethernet-Netzwerk mit mehreren, über Ethernet-Leitungen verbundenen Steckverbindungsmodulen, die jeweils gemäß der vorliegenden Beschreibung ausgebildet sein können. Dabei sind die Steckverbindungsmodule mit jeweils einem elektronischen Gerät verbunden und über ihre jeweiligen Ethernet-Anschlüsse in das linienförmige Ethernet-Netzwerk eingebunden, wobei das linienförmige Ethernet-Netzwerk weiterhin einen Netzknoten oder eine Spannungsquelle zur Einspeisung von elektrischer Energie in das Ethernet-Netzwerk umfasst.

Durch die Verwendung von Steckverbindungsmodulen gemäß der vorliegenden Beschreibung zum Aufbau eines solchen linienförmigen Netzwerks ergibt sich ein einfacher Aufbau eines solchen Netzwerks, welches trotzdem gegen den Ausfall einzelner oder auch mehrerer über die Steckverbindungsmodule daran angeschlossener elektronischer Geräte abgesichert ist.

Ein Netzknoten oder eine Spannungsquelle zur Einspeisung von elektrischer Energie in das Ethernet-Netzwerk kann beispielsweise eine PeO-Switch, ein PoE-Router, eine PoE-Bridge oder ein PeO-Hub sein oder auch eine Spannungsquelle, welche ausschließlich zur Einspeisung von elektrischer Energie in ein oder mehrere Ethernet-Kabel vorgesehen ist.

Weitere vorteilhafte Ausgestaltungen finden sich in den Unteransprüchen.

Im Folgenden wird die Erfindung beispielhaft mit Bezug auf die beiliegenden Zeichnungen näher erläutert.

Es zeigen:
- Figur 1: Beispiel für einen Ethernet-T-Stecker zum Anschluss an ein externes Gerät,
- Figur 2: Beispiel für ein linienförmiges Ethernet-Netz-Segment unter Verwendung mehrerer Ethernet-T-Stecker gemäß Figur 1.

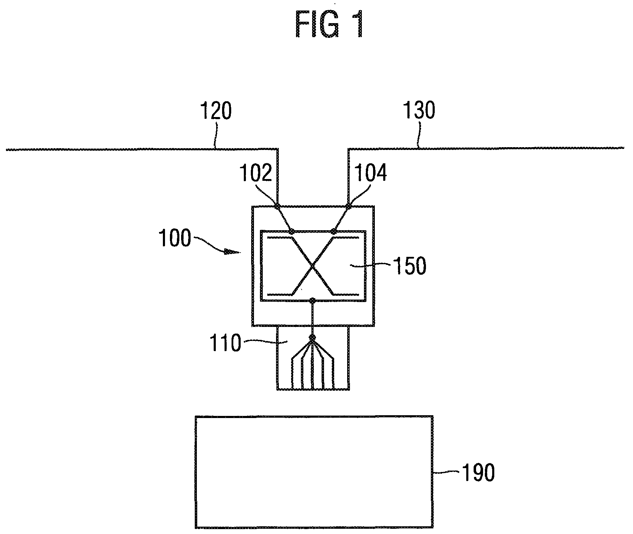

Figur 1 zeigt einen Ethernet-T-Stecker 100 zum Anschluss eines Endgeräts mit Ethernet-Schnittstelle 190 an ein industrielles Ethernet mit einer ersten Ethernet-Leitung 120 und einer zweiten Ethernet-Leitung 130. Der Ethernet-T-Stecker weist einen ersten Ethernet-Anschluss 102 auf, der an die erste Ethernet-Leitung 120 angeschlossen ist, und weiterhin einen zweiten Ethernet-Anschluss 104 auf, welcher an die zweite Ethernet-Leitung 130 angeschlossen ist. Zum Anschluss an das Endgerät 190 umfasst der Ethernet-T-Stecker 100 einen RJ45-Stecker 110 zum Einstecken in eine entsprechende Buchse des Endgeräts 190, um das Endgerät 190 damit an die Ethernet-Leitungen 120, 130 anzuschließen. Der Ethernet-T-Stecker 100 ist dabei ein Beispiel für ein Steckverbindungsmodul gemäß der vorliegenden Beschreibung.

Der Ethernet-Stecker 100 umfasst weiterhin ein Switching-Modul 150, mit welchem die Ethernet-Anschlüsse 102, 104 sowie der Gerätestecker 110 verbunden sind. Das Switching-Modul 150 analysiert z.B. über eine der Ethernet-Leitungen 120, 130 eingehende Ethernet-Rahmen. Enthält ein solcher Ethernet-Rahmen als Ziel-Adresse die MAC-Adresse des Endgeräts 190, so leitet das Switching-Modul 150 diesen Rahmen über den Gerätestecker 110 an das Endgerät 190 weiter. Enthält der ankommende Ethernet-Rahmen die MAC-Adresse eines anderen Endgeräts als das angeschlossene Gerät, so wird dieser Ethernet-Rahmen vom Switching-Modul 150 über den anderen Ethernet-Anschluss 102, 104 an die entsprechend andere Ethernet-Leitung 120, 130 weitergeleitet. Kommt über eine der Ethernet-Leitungen 120, 130 eine Broadcast- oder Multicast-Nachricht, so wird diese sowohl über den Gerätestecker 110 an das angeschlossene Endgerät 190 als auch über den anderen Ethernet-Anschluss 102, 104 an das andere Ethernet-Kabel 120, 130 übertragen.

Die Energieversorgung des Switching-Moduls 150 erfolgt in Figur 1 über die linke Ethernet-Leitung 120, an welche eine Energieversorgung gemäß dem POE-Standard angeschlossen ist. Gemäß dem POE-Standard werden zumindest zwei der Leitungen innerhalb des Ethernet-Kabels 120 zur Energieversorgung verwendet. Über diese zwei Leitungen entnimmt das Switching-Modul 150 die für seinen Betrieb notwendige Energie und speist die verbliebene elektrische Energie über den rechten Ethernet-Anschluss 104 in die weiterführende Ethernet-Leitung 130 ein, so dass ein ggf. daran hängendes Gerät oder ein weiterer gleichartiger Ethernet-T-Stecker ebenfalls noch mit dieser verbleibenden elektrischen Energie versorgt werden kann.

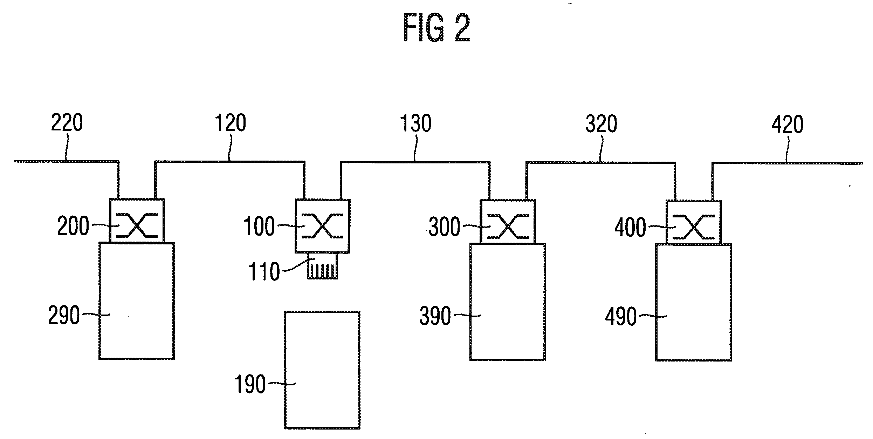

Figur 2 zeigt ein aus vier Ethernet-T-Steckern 100, 200, 300, 400 aufgebautes linienförmiges Ethernet-Teilnetz. Dabei sind die Ethernet-T-Stecker 100, 200, 300, 400 jeweils gemäß den in Figur 1 dargestellten Ethernet-T-Stecker 100 ausgestaltet. Die Bezugszeichen in Figur 2 entsprechen demjenigen in Figur 1, wo diese übereinstimmen. An die Ethernet-T-Stecker 100, 200, 300, 400 sind jeweils Endgeräte 190, 290, 390, 490 angeschlossen, welche über das Ethernet mit Daten und Informationen versorgt werden und/oder über das Ethernet Daten und Informationen übertragen.

Das in Figur 2 dargestellte Ethernet-Netzsegment ist aus Ethernetleitungen 120, 130, 220, 320, 420 aufgebaut, welche über die Ethernet-T-Stecker 100, 200, 300, 400 zu einer Linie zusammengesetzt sind. Dabei ist die ganz links eingezeichnete Ethernet-Leitung 220 beispielsweise mit einem Switch verbunden, so dass in das in Figur 2 dargestellte Linien-Teilnetz z.B. über die linke Ethernet-Leitung 220 Ethernet-Rahmen zugeführt werden können. Diese werden dann von den einzelnen Ethernet-T-Steckern 100, 200, 300, 400 bzw. deren Switching-Modulen 150 analysiert und entweder an das jeweils angeschlossene Gerät 190, 290, 390, 490 weitergeleitet, wenn beispielsweise die MAC-Adresse des Ethernet-Rahmens der MAC-Adresse des angeschlossenen Geräts 190, 290, 390, 490 entspricht, oder an die nachfolgende Ethernet-Leitung 120, 130, 320, 420 weitergeleitet, wo der jeweils nachfolgend angeordnete T-Stecker 100, 300, 400 dann die analoge Überprüfung des entsprechenden Ethernet-Rahmens übernimmt.

Die Energie-Versorgung der Ethernet-T-Stecker 100, 200, 300, 400 wird in Figur 1 durch das ganz links in Figur 2 dargestellte Gerät 290 bewirkt, welches gemäß dem PoE-Standard 802.3af als Spannungsquelle gemäß dem PoE-Standard ausgestattet ist. Der an dieses externe Gerät 290 angesteckte T-Stecker 200 entnimmt die für seinen Betrieb notwendige elektrische Energie und speist die verbleibende elektrische Energie in die nach rechts verlaufende Ethernet-Leitung 120, und ggf. auch in die nach links laufende Ethernet-Leitung 220 ein. Der nachfolgende T-Stecker 100 entnimmt aus dieser Ethernet-Leitung 120 wiederum die für seinen Betrieb notwendige elektrische Energie und leitet den dann verbleibenden Rest an die nach rechts weiter verlaufende Ethernet-Leitung 130 weiter. Nach diesem Prinzip werden alle vier T-Stecker 100, 200, 300, 400 mit elektrischer Energie versorgt, ohne dass weitere Spannungsversorgungen oder Stromanschlüsse notwendig sind. Auf diese Weise können ggf. bis zu 10, 20 oder auch 30 solcher T-Stecker 100, 200, 300, 400 mit bis zu 30 m Ethernet-Kabel zwischen den einzelnen Steckern aneinandergereiht werden.

In Figur 2 ist als Beispiel der Fall dargestellt, in welchem eines der angeschlossenen Geräte, in diesem Fall das zweite Gerät von links 190, ausfällt bzw. vom Netz entfernt wird. In diesem Fall erreichen weiterhin über den dargestellten Mechanismus alle Ethernet-Rahmen, die an eines der verbleibenden Geräte 290, 390, 490 adressiert sind, ihre jeweiligen Empfänger. Damit treten im Netz, abgesehen vom Ausfall des einen Geräts 190, keine weiteren Störungen auf. In diesem Fall kann also beispielsweise eine ringförmige Netz-Struktur, die z.B. in herkömmlichen Ethernet-Netzen notwendig ist, um den Zusammenbruch des Netzwerkes durch den Ausfall eines Geräts zu verhindern, umgangen werden. Ein gemäß Figur 2 aufgebautes Netz hat zusätzlich den wesentliche Vorteil z.B. gegenüber einem Ring-Netz, dass auch weitere Geräte ausfallen können, ohne das Linien-Ethernet zu unterbrechen und die Funktionsfähigkeit des Netzes zu zerstören.

Die vorliegende Erfindung beschreibt einen Ethernet-T-Stecker zum Anschluss eines elektronischen Geräts an ein Ethernet, welcher beispielsweise eine Switching-Funktionalität aufweist, um nur die für das angeschlossene Gerät vorgesehene Information an dieses weiter zu leiten und den Rest der Informationen über eine vom T-Stecker abgehende Ethernet-Leitung weiter zu senden. Zusätzlich kann die Energie-Versorgung des T-Steckers ebenfalls über die Ethernet-Leitung erfolgen, so dass keine zusätzlichen Stromquellen für den Betrieb der T-Stecker erforderlich sind und so eine relativ einfache und gut installierbare und dabei trotzdem vergleichsweise ausfallsichere Ethernet-Netz-Struktur zu erhalten.

## Patentansprüche

1. Linienförmiges Ethernet-Netzwerk mit mehreren über Ethernet-Leitungen (120, 130, 220, 320, 420) verbundenen Steckverbindungsmodulen,
wobei die Steckverbindungsmodule (100, 200, 300, 400) jeweils
- einen ersten (102) und einen zweiten Ethernet-Anschluss (104) zur Verbindung mit einem oder mehreren Ethernet-Netzen (120, 130, 220, 320, 420) oder Ethernet-Teilnetzen und einen Geräte-Anschluss (110) zur Verbindung mit dem elektronischen Gerät (190, 290, 390, 490) umfassen,
- ein Schalt-Netzknoten-Modul (150) umfassen,
- wobei die zwei Ethernet-Anschlüsse (102, 104) sowie der Geräte-Anschluss (110) über das Schalt-Netzknoten-Modul (150) derart gekoppelt sind, dass ein über einen der Anschlüsse (102, 104, 110) eingehender Ethernet-Rahmen an mindestens einen der anderen Anschlüsse (102, 104, 110) weiterleitbar ist oder weitergeleitet wird, und
- wobei die Versorgung des Schalt-Netzknoten-Moduls (150) mit elektrischer Energie über den ersten Ethernet-Anschluss (102) und/oder den zweiten Ethernet-Anschluss (104) erfolgt,
**dadurch gekennzeichnet, dass**
- die Steckverbindungsmodule (100, 200, 300, 400) jeweils derart ausgebildet und eingerichtet sind, dass über den Geräte-Anschluss (110) zugeführte elektrische Energie zumindest teilweise an den ersten (102) und/oder zweiten Ethernet-Anschluss (104) weitergeleitet wird,
- die Steckverbindungsmodule (100, 200, 300, 400) mit jeweils einem elektronischen Gerät (190, 290, 390, 490) verbunden und über ihre Ethernet-Anschlüsse in das linienförmige Ethernet-Netzwerk eingebunden sind,
- das linienförmige Ethernet-Netzwerk einen Netzknoten (290) oder eine Spannungsquelle zur Einspeisung von elektrischer Energie in das Ethernet-Netzwerk umfasst.

2. Linienförmiges Ethernet-Netzwerk nach Anspruch 1,
**dadurch gekennzeichnet,**
**dass** das Schalt-Netzknoten-Modul (150) derart ausgebildet ist, dass ein eingehender Ethernet-Rahmen an den Anschluss (102, 104, 110) des Steckverbindungsmoduls (100, 200, 300, 400) weitergeleitet wird, welcher mit dem für den Ethernet-Rahmen vorgesehenen Empfänger verbunden ist.

3. Linienförmiges Ethernet-Netzwerk nach Anspruch 1 oder 2,
**dadurch gekennzeichnet,**
**dass** das Schalt-Netzknoten-Modul (150) derart ausgebildet ist, dass
- ein über einen der Ethernet-Anschlüsse (102, 104) eingehender und an ein an den Geräte-Anschluss (110) angeschlossenes elektronisches Gerät (190, 290, 390, 490) adressierter oder für das angeschlossene elektronische Gerät (190, 290, 390, 490) vorgesehener Ethernet-Rahmen zum Geräte-Anschluss (110) weitergeleitet wird und
- ein an andere Geräte adressierter oder für andere Geräte vorgesehener Ethernet-Rahmen an den anderen der Ethernet-Anschlüsse (102, 104) weitergeleitet wird.

4. Linienförmiges Ethernet-Netzwerk nach einem der Ansprüche 1 bis 3,
**dadurch gekennzeichnet,**
**dass** das Steckverbindungsmodul derart ausgebildet und eingerichtet ist, dass über einen oder mehrere der Anschlüsse (102, 104, 110) zugeführte elektrische Energie zumindest teilweise an die verbleibenden Anschlüsse (102, 104, 110) weitergeleitet wird.

5. Linienförmiges Ethernet-Netzwerk nach einem der Ansprüche 1 bis 4,
**dadurch gekennzeichnet,**
**dass** das Steckverbindungsmodul (100, 200, 300, 400) derart ausgebildet und eingerichtet ist, dass über den ersten Ethernet-Anschluss (102) zugeführte elektrische Energie zumindest teilweise an den zweiten Ethernet-Anschluss (104) weitergeleitet wird und/oder umgekehrt.

6. Linienförmiges Ethernet-Netzwerk nach einem der Ansprüche 1 bis 5,
**dadurch gekennzeichnet,**
**dass** das Steckverbindungsmodul (100, 200, 300, 400) als eine starr zusammenhängende bauliche Einheit ausgestaltet ist.

7. Linienförmiges Ethernet-Netzwerk nach einem der Ansprüche 1 bis 6,
**dadurch gekennzeichnet,**
**dass** das Steckverbindungsmodul (100, 200, 300, 400) ein Gehäuse aufweist und der Geräte-Anschluss (110) als Steckverbinder ausgebildet ist,
insbesondere, dass das Gehäuse und der Steckverbinder starr miteinander verbunden sind und/oder einstückig ausgebildet sind.

## Claims

1. Linear Ethernet network having a plurality of plug connection modules connected via Ethernet lines (120, 130, 220, 320, 420),
the plug connection modules (100, 200, 300, 400) each comprising
- a first Ethernet connection (102) and a second Ethernet connection (104) for connection to one or more Ethernet networks (120, 130, 220, 320, 420) or Ethernet subnetworks and a device connection (110) for connection to the electronic device (190, 290, 390, 490),
- a switching network node module (150),
- the two Ethernet connections (102, 104) and the device connection (110) being coupled via the switching network node module (150) in such a manner that an Ethernet frame arriving via one of the connections (102, 104, 110) can be forwarded or is forwarded to at least one of the other connections (102, 104, 110), and
- the switching network node module (150) being supplied with electrical energy via the first Ethernet connection (102) and/or the second Ethernet connection (104),
**characterized in that**
- the plug connection modules (100, 200, 300, 400) are each designed and set up in such a manner that electrical energy supplied via the device connection (110) is at least partially forwarded to the first Ethernet connection (102) and/or second Ethernet connection (104),
- the plug connection modules (100, 200, 300, 400) are connected to a respective electronic device (190, 290, 390, 490) and are incorporated in the linear Ethernet network via their Ethernet connections,
- the linear Ethernet network comprises a network node (290) or a voltage source for feeding electrical energy into the Ethernet network.

2. Linear Ethernet network according to Claim 1, **characterized in that**
the switching network node module (150) is designed in such a manner that an arriving Ethernet frame is forwarded to that connection (102, 104, 110) of the plug connection module (100, 200, 300, 400) which is connected to the receiver intended for the Ethernet frame.

3. Linear Ethernet network according to Claim 1 or 2, **characterized in that**
the switching network node module (150) is designed in such a manner that
- an Ethernet frame arriving via one of the Ethernet connections (102, 104) and addressed to an electronic device (190, 290, 390, 490) connected to the device connection (110) or intended for the connected electronic device (190, 290, 390, 490) is forwarded to the device connection (110), and
- an Ethernet frame addressed to other devices or intended for other devices is forwarded to the other connection of the Ethernet connections (102, 104).

4. Linear Ethernet network according to one of Claims 1 to 3,
**characterized in that**
the plug connection module is designed and set up in such a manner that electrical energy supplied via one or more of the connections (102, 104, 110) is at least partially forwarded to the remaining connections (102, 104, 110).

5. Linear Ethernet network according to one of Claims 1 to 4,
**characterized in that**
the plug connection module (100, 200, 300, 400) is designed and set up in such a manner that electrical energy supplied via the first Ethernet connection (102) is at least partially forwarded to the second Ethernet connection (104) and/or vice versa.

6. Linear Ethernet network according to one of Claims 1 to 5,
**characterized in that**
the plug connection module (100, 200, 300, 400) is in the form of a rigidly cohesive structural unit.

7. Linear Ethernet network according to one of Claims 1 to 6,
**characterized in that**
the plug connection module (100, 200, 300, 400) has a housing and the device connection (110) is in the form of a plug connector,
in particular **in that** the housing and the plug connector are rigidly connected to one another and/or are formed in one piece.

## Revendications

1. Réseau éthernet linéaire comprenant plusieurs modules de connexion reliés par des lignes (120, 130, 220, 320, 420) éthernet,
dans lequel les modules (100, 200, 300, 400) de connexion comprennent respectivement
- un premier (102) et un deuxième accès (104) éthernet de liaison à un ou plusieurs réseaux (120, 130, 220, 320, 420) éthernet et sous-réseau éthernet et un accès (110) d'appareils de liaison à l'appareil (190, 290, 390, 490) électronique,
- un module (150) de noeuds de réseau de commutation,
- les deux accès (102, 104) d'Éthernet ainsi que l'accès (110) d'appareils sont couplés par le module (150) de noeuds de réseau de commutation de manière à ce qu'une trame éthernet entrant par l'un des accès (102, 104, 110) puisse être acheminée ou est acheminée sur au moins l'un des autres accès (102, 104, 110) et
- dans lequel l'alimentation en énergie électrique du module (150) de noeuds de réseau de commutation s'effectue par le premier accès (102) d'éthernet et/ou par le deuxième accès (104) d'éthernet,
**caractérisé en ce que**
- les modules (100, 200, 300, 400) de connexion sont constitués et conçus respectivement de manière à ce que de l'énergie électrique apportée par l'accès (110) d'appareils soit acheminée au moins en partie au premier (102) et/ou au deuxième accès (104) d'éthernet,
- les modules (100, 200, 300, 400) de connexion sont reliés respectivement à un appareil (190, 290, 390, 490) électronique et sont, par leur borne d'éthernet, incorporés au réseau d'éthernet linéaire,
- le réseau d'éthernet linéaire comprend un noeud (290) de réseau ou une source de tension pour injecter de l'énergie électrique dans le réseau d'éthernet.

2. Réseau d'éthernet linéaire suivant la revendication 1,
**caractérisé**
**en ce que** le module (150) de noeuds de réseau de commutation est constitué de manière à ce qu'une trame d'éthernet entrante soit acheminée à l'accès (102, 104, 110) du module (100, 200, 300, 400) de connexion, qui est relié au récepteur prévu pour la trame éthernet.

3. Réseau d'éthernet linéaire suivant la revendication 1 ou 2,
**caractérisé**
**en ce que** le module (150) de noeuds de réseau de commutation est constitué de manière à ce que
- une trame d'éthernet entrant par l'un des accès (102, 104) d'éthernet adressée à un appareil (190, 290, 390, 490) électronique raccordé à l'accès (110) d'appareils ou prévu pour l'appareil (190, 290, 390, 490) électronique raccordé soit acheminée à l'accès (110) d'appareils et
- une autre trame d'éthernet adressée à d'autres appareils ou prévue pour d'autres appareils soit acheminée à l'autre d'accès (102, 104) d'éthernet.

4. Réseau d'éthernet linéaire suivant l'une des revendications 1 à 3,
**caractérisé**
**en ce que** le module de connexion est constitué et conçu pour acheminer au moins en partie aux accès (102, 104, 110) restants de l'énergie électrique apportée par l'un ou par plusieurs des accès (102, 104, 110).

5. Réseau d'éthernet linéaire suivant l'une des revendications 1 à 4,
**caractérisé**
**en ce que** le module (100, 200, 300, 400) de connexion est constitué et conçu pour acheminer au moins en partie à l'autre borne (104) d'éthernet de l'énergie électrique apportée par le premier accès (102) d'éthernet et/ou inversement.

6. Réseau d'éthernet linéaire suivant l'une des revendications 1 à 5,
**caractérisé**
**en ce que** le module (100, 200, 300, 400) de connexion est sous la forme d'une unité de construction d'un seul tenant de manière fixe.

7. Réseau d'éthernet linéaire suivant l'une des revendications 1 à 6,
**caractérisé**
**en ce que** le module (100, 200, 300, 400) de connexion a un boîtier et l'accès (110) d'appareils est constitué sous la forme d'un connecteur,
notamment en ce que le boîtier et le connecteur sont reliés entre eux de manière rigide et/ou sont constitués d'une seule pièce.
